# EUROPEAN PATENT SPECIFICATION

(11) **EP 1 735 173 B1**
(45) Date of publication and mention of the grant of the patent: **07.05.2008**
(21) Application number: 05717976.4
(22) Date of filing: 10.03.2005
(51) Int. Cl.: B60K 15/00, B67D 5/33

(54) **A MISFUELLING PROTECTION SYSTEM FOR A VEHICLE**
SYSTEM FÜR EIN FAHRZEUG ZUR VERHINDERUNG EINES FALSCHEN BEFÜLLENS MIT KRAFTSTOFF
SYSTEME DE PROTECTION CONTRE UNE ERREUR DE RAVITAILLEMENT EN CARBURANT POUR UN VEHICULE

(30) Priority: 12.03.2004 GB 0405587; 22.04.2004 GB 0408940
(43) Date of publication of application: 27.12.2006
(73) Proprietor: OK FUEL LTD., Hillesden Buckinghamshire MK18 4DB (GB)
(72) Inventor: BANKS, Gary John, Buckinghamshire MK18 4DB (GB)
(74) Representative: Stanley, Michael Gordon
(86) International application number: PCT/GB2005/000911
(87) International publication number: WO 2005/087529

(56) References cited:
- WO-A-01/03983
- WO-A-20/05021419
- DE-A1- 4 443 298
- DE-A1- 19 852 814
- US-A- 4 263 945
- US-A- 5 249 612
- US-A- 5 383 500
- US-A- 6 032 703
- US-A- 6 085 805

## Description

### Field

This invention relates to the prevention of misfuelling of vehicle fuel tanks with the wrong fuel supplied by fuel pumps, and in particular to fuel pumps used on the forecourts of garages for the supply of a plurality of different fuels to motor vehicles.

### Background of the Invention

Garage forecourts are typically equipped with a number of fuel pumps which dispense a variety of different fuels. It is very common for a single pump to supply both petrol (gasoline) and diesel fuel through respective supply nozzles. Many precautions are taken to prevent the wrong fuel from being accidentally supplied to a vehicle. The fuel lines to the different fuel nozzles are sometimes colour coded e.g. diesel lines may be black and lead free petrol lines may be green , the fuel filler inlets on the vehicle may also be likewise coloured, and the fuel nozzles and filler are mutually sized so that in theory it is difficult to put a wrong nozzle into a filler inlet. Despite all these precautions, it is estimated that there are over 120,000 incidents of misfuelling on the forecourts of the United Kingdom alone in any one year.

At the very least, the fuel tank must be drained after a misfuelling and this gives rise to environmental problems with the possible spillage and then disposal of the fuel. The internal cleaning of a drained tank containing fuel vapours is a dangerous operation. If the engine has been started and run with the wrong fuel in the tank, this may give rise to problems in the fuel supply system, engine and exhaust catalyser. It is estimated that the cost of repair to a vehicle which has been incorrectly fuelled can be anything between £80.00 to £3000.00, depending on what remedial work is required after the addition of a wrong fuel into a vehicle fuel tank.

An automatic fuel dispensing control system is shown in US 4263 945 A. Other controls for dispensing fuel are shown in WO 01/03983 A, US 5249,612 A, DE4443298 A. A method of transferring data from a vehicle is described in DE 19852 814 A.

The present invention provides a protection against misfuelling and helps prevent a wrong fuel from being supplied to a vehicle fuel tank from a garage forecourt.

### Statements of Invention

According to a first aspect of the present invention there is provided a misfuelling protection system when fuelling a vehicle from a fuel delivery pump of the type typically used for supply of fuel to a vehicle on a garage forecourt and which comprises a a transceiver on the fuel pump and a transponder on the vehicle, the transceiver transmitting a request signal to the transponder and receiving a response signal therefrom and having a pre-programmed control unit for comparing the response signal with a plurality of anticipated response signals stored therein , characterised in that the control unit is programmed to recognise (N-1) response signals as incorrect signals, where N is the number of anticipated signals, and the control unit responds to receipt of any one of said anticipated incorrect signals prevent a fuel delivery, such that the control unit does not react to a correct signal or to no signal.

The unit does not react to a correct signal or to NO signal and in such circumstances will not prevent the delivery of fuel. The control unit may also send a signal to alert a pump operations centre to a possible misfuelling situation.

The protection system additionally may comprise a warning device to alert the pump user.

The transceiver may be mounted on the pump delivery nozzle and the transponder may be mounted adjacent the fuel filler inlet on the vehicle. The transceiver may also supply a nozzle detect signal which indicates when the nozzle is located in the filler inlet, and a time elapse signal which limits the time period for which the response signal is valid in order to reset the control unit after a filling operation. The transceiver may be powered by a power take-off from the pump or may be powered by an internal power unit such as a battery or photovoltaic cell sealed within the transceiver.

The warning signal may comprise a visual and/or audible warning in the event that the response signal is an incorrect signal. The control unit may also send a signal which operates a visual and/or audible signal indicating that the signal is not an incorrect signal for the desired fuel.

The control unit may communicate with the transceiver by radio waves or via wiring.

The transponder device on the vehicle may have a programmable data storage system which as well as storing information relating to the correct vehicle fuel, stores and gathers other information relating to the vehicle, for example registration number, fuelling pattern, registered owner etc.

According to a second aspect of the present invention, there is provided a method of protecting against a wrong fuel being supplied by a fuel delivery pump , typically used for supply of fuel on a garage forecourt, to a vehicle fuel tank, said method comprising providing a transceiver on the fuel pump and a transponder on the vehicle, the transceiver having a pre-programmed control unit for comparing a response signal from the transponder with a plurality of anticipated response signals stored therein, characterised by the transceiver transmitting a request signal to the transponder and receiving a response signal therefrom, the control unit recognising N-1 response signals as incorrect signals, where N is the number of anticipated signals and the control unit responding to any of said incorrect signals to prevent a fuel delivery, such that the control unit does not react to a correct signal or to no signal.

If the response signal is not an incorrect signal, or there is NO response signal, the pump is authorised to dispense fuel. This latter condition is to permit fuelling of vehicles which are not fitted with the misfuelling protection system. In the event of receiving NO signal, for example in the absence of a transponder, or a faulty transponder, the system may activate a caution alarm prior to the pump dispensing fuel.

Additionally, the potential supply of the wrong fuel may be indicated by operation of a warning device.

### Description of the Drawing

The invention will be described by way of Example and with reference to the accompanying drawings in which:
- Fig. 1: is a schematic view of a vehicle fuel filler inlet including the transponder of a system according to the present invention,
- Fig. 2: is a view of a fuel delivery nozzle of a pump including a misfuelling prevention system according to a first aspect of the present invention,
- Fig. 3: is a schematic diagram of the protection system,
- Fig. 4: is a flow diagram showing the steps within the control unit, and
- Fig 5: is view of a second fuel delivery nozzle of a misfuelling prevention system according to a second aspect of the present invention.

### Detailed Description of the Invention

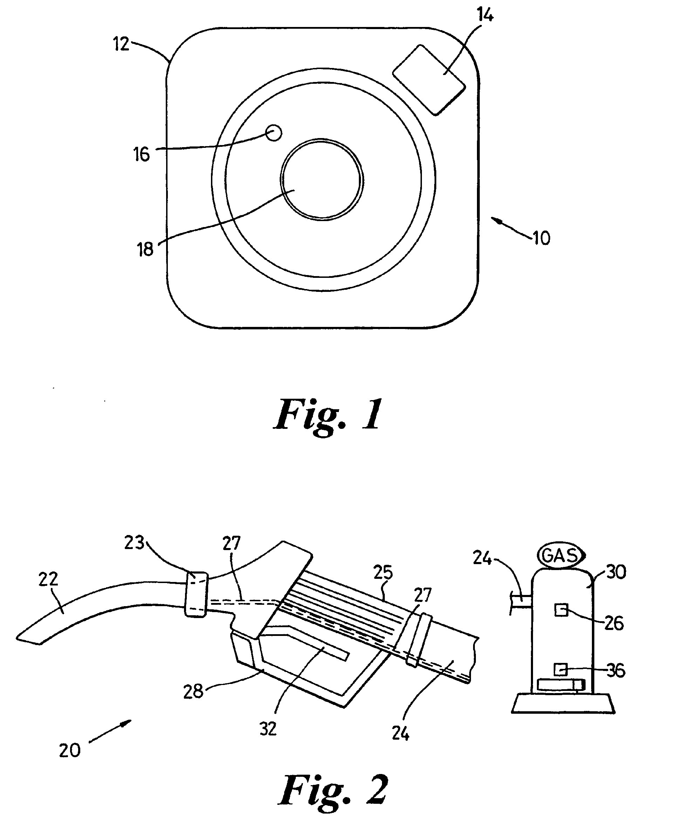

With reference to Figs. 1 & 2 there is shown a vehicle fuel filler inlet 10 and a fuel pump delivery nozzle 20 equipped with a misfuelling protection system according to one aspect of the present invention. The filler inlet 10 has a housing 12 surrounding the mouth 18 of a fuel inlet pipe and may be provide with a breather 18. A transponder 14 is mounted within the housing 12 by any suitable means e.g. adhesive, self-adhesive strip, etc. The transponder 14 has a code programmed thereon which relates to the approved vehicle fuel type and may be programmed with other information such as vehicle registration number, owner's name, and may also be programmed to gather data relating to vehicle fuelling.

There will be a plurality of different codes for respective different fuels e.g. Diesel, Unleaded Petrol, Lead Replacement Petrol, etc and each transponder will carry only a specific fuel code.

The delivery nozzle 20 is connected to a fuel pipe 24 which receives fuel from a garage forecourt pump 30. The fuel is dispensed through a dispensing nozzle 22 held by a handle 25 and the speed and volume of the delivery is controlled by a trigger 32 enclosed within a guard 28.

A transceiver 23 is mounted on the dispensing nozzle at the root thereof. The transceiver 23 communicates with a control unit 26, which in this embodiment is mounted on the pump 30. The transceiver 23 communicates with the control unit 26 by means of radio signals, infra red signals or through wiring 27.

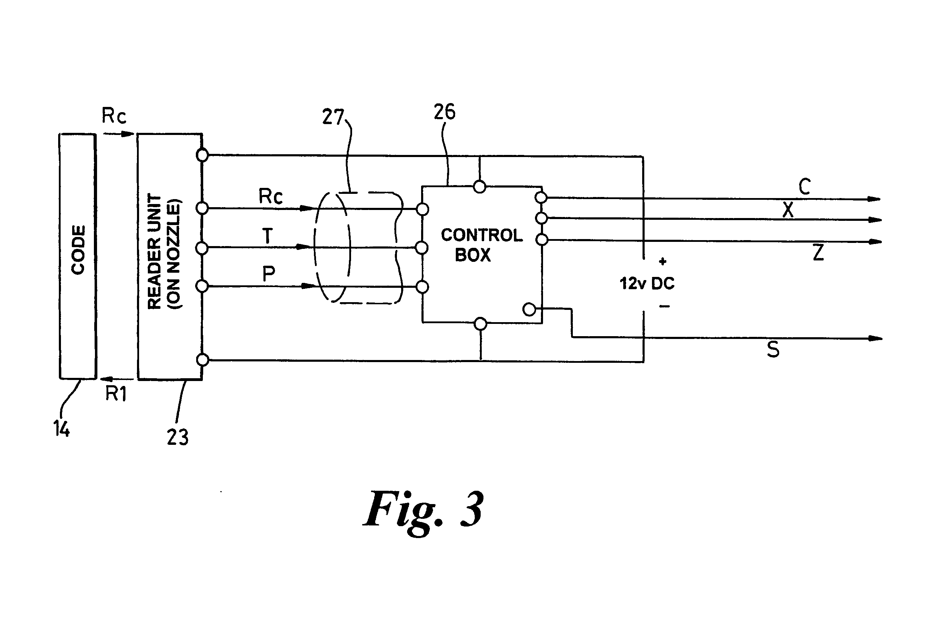

Referring now to Fig. 3, when the fuel nozzle 20 is placed in proximity with the fuel inlet 10, and the system is activated, the transceiver 23 transmits a request signal R1 to the transponder 14 which automatically sends a coded response Rc signal back to the transceiver. The signal Rc carries a code for a particular fuel and may also carry other information which allows the transceiver 23 to recognise specific data relating to the vehicle. The transceiver 23 then sends the received response signal RC to a pre-programmed control unit 26. The control unit 26 may be separate from the transceiver 23 and located on the pump 30 as shown, or alternatively may be conjoined with the transceiver as is described later.

The transceiver 23 may also generate a proximity signal P which informs the control unit that the transponder 14 is close and hence that the dispensing nozzle 22 is located in the fuel inlet 10. The transceiver 23 may also generate an elapsed time signal T which gives the elapsed time for which the nozzle has been in proximity to the transponder 14.

The control unit 26 is pre-programmed with a plurality N of different codes including codes which each represent a particular currently available fuel type, and spare codes for further fuel types which may become available in the future and any other pertinent information. These codes are the anticipated codes. The control unit is programmed to recognise N-1 codes of the anticipated codes as incorrect codes. The correct code corresponds with the fuel type for the particular pump and will be recognised as such by the control unit 26. The control unit 26 is connected to the pump control 36 to control the operation of the fuel pump 30. In the event of an incorrect code being recognised, the control unit 26 will transmit a misfuelling protection activation signal C which prevents the pump from dispensing fuel.

The control unit 26 may also provide a warning signal X which operates an audible and/or optical alert to indicate that an incorrectly coded transponder 14 is proximate to the transceiver 23 . This indicates that a wrong fuel nozzle is presented to the fuel inlet. The control unit may also provide a signal Z indicating that a not incorrect transponder is proximate the transceiver. This indicates that the correct fuel nozzle is presented to the fuel inlet.

Other signals S may be generated by the control unit 26 which may convey information relating to the vehicle to a fuel pump operations centre and this information may be used to generate a personalised greeting at the pump, data capture, billing and security functions and other informations as may be programmed into the transponder 14. The other signals S may also include a signal to indicate that NO transponder signal has been received by the transceiver 23.

The control unit 26 may be pre-programmed to shut down the unit in the event of an internal failure.

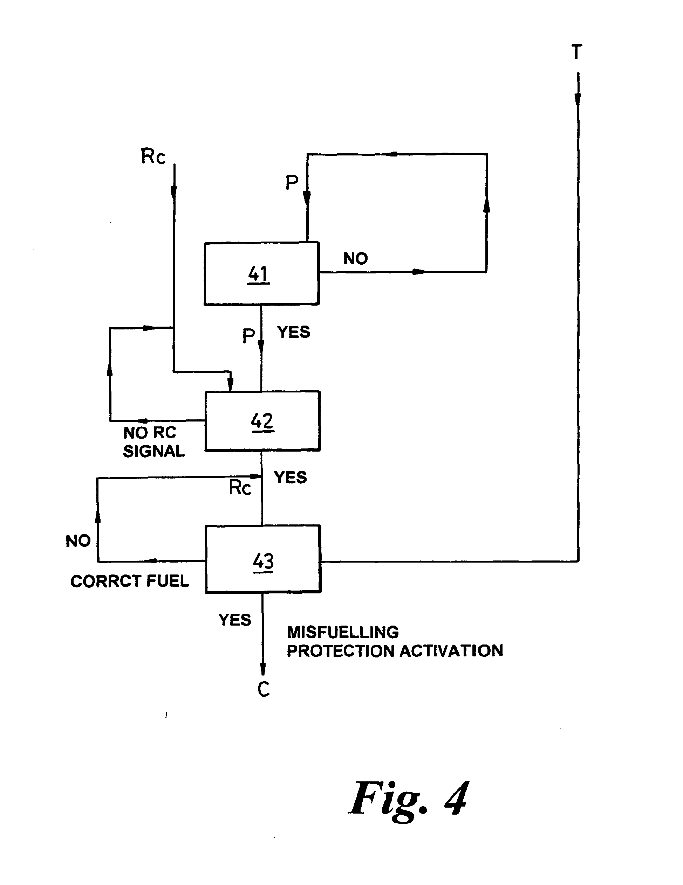

With reference also to Fig. 4 , control unit 26 operates as follows:
i) Step 41 determines if there is a proximity signal P. If there is no proximity signal the step repeats via a control loop and if there is a proximity signal P, then the signal P is passed through to step 42.
ii) in the presence of a proximity signal P, step 42 determines if there is coded response signal Rc. If there is no coded response signal Rc, the step is repeated via a control loop. If the response signal Rc is present, the signal is passed on to step 43.
iii) Step 43 determines if the Response signal code Rc is recognised as an incorrect signal for the particular pump. If no and within the elapsed time T, the step is repeated via a control loop. If an incorrect signal is recognised, a prevention activation signal C is sent to the pump control 36 to switch off the pump so there is no fuel delivery.

Since the system has to positively switch off the pump 30 when an incorrect code is received, if NO signal is received the pump is still serviceable for dispensing fuel into containers and vehicles without the protection system. In the event that the transceiver does not sense the presence of a transponder, the control unit 28 may through signal S trigger a caution alarm, being a different alarm to the alert triggered by signal C and may for example comprise an amber flashing light source such as an LED.

The control unit 26 may be re-programmable so that the control unit recognises a different selection of incorrect fuel codes allowing the control unit to be used on different pumps supplying different fuel types.

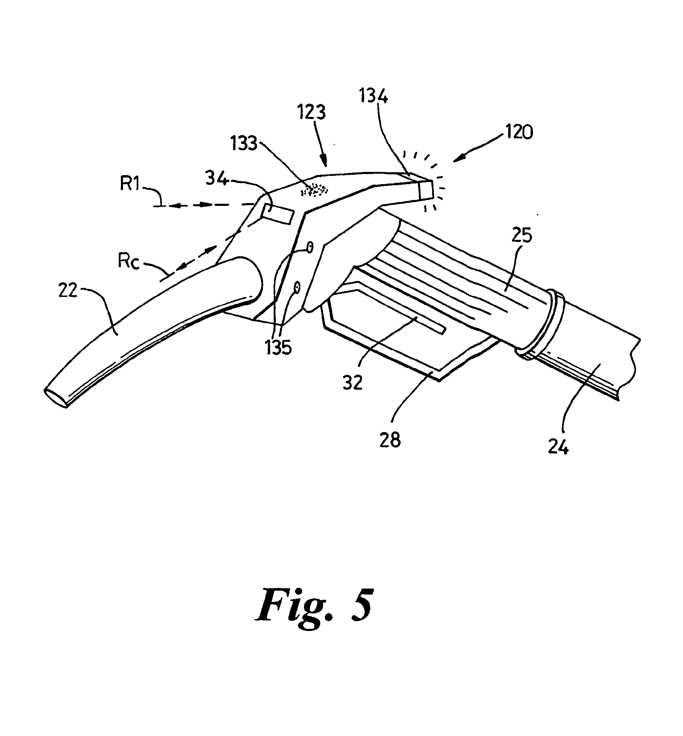

Fig.5 discloses another example of a delivery nozzle 120 connected to a fuel pipe.24 which receives fuel from a garage forecourt pump 30. The second nozzle 120 forms part of a second misfuelling protection system in accordance with the present invention and the same reference number will be used for components also present in the first embodiment.

A transceiver unit 123 is mounted over the dispensing nozzle 22 and may be enclosed in a robust housing 133 formed from a tough plastics material and secured in place by fasteners135, e.g. tamper proof screws. The unit 123 is a sealed self contained unit which is water proof and spark proof The housing 133 may be in part translucent or/ transparent to assist in charging of any photoelectric power cells within the unit. An audible and/ or visible warning device 134 is mounted on the housing 133 at an easily visible location. The transceiver unit 123 includes a transceiver 34 located on the housing 33 in a suitable position for communicating with the transponder 14 e.g. by infra red, electromagnetic or radio signals .

The system operates in a similar manner to that described previously with regard to Figs 3 & 4. The transceiver unit 123 includes a pre-programmed control unit 26 located within the housing 133 which receives the response signal RC from transceiver 34. In the event of the response signal Rc having an incorrect code, the control unit 26 will transmit an activation signal C which operates the warning device 134 to indicate that an incorrectly coded transponder 14 is proximate to the transceiver unit 23 . This indicates that a wrong fuel nozzle is presented to the fuel inlet.

The control unit 26 may also provide a second signal X which in this embodiment may be utilised to prevent fuel delivery by the pump. The control unit may also provide a signal Z indicating that a not incorrect transponder is proximate the transceiver. This signal Z may be utilised to operate a positive "Proceed " indicator showing to the user that the correct fuel nozzle is presented to the fuel inlet. The control unit 26 may also issue other signals S as previously described.

The warning device 134 may comprise three different coloured LEDs, which are selectively operated by the different signals C, X & S for example green LED's as a proceed indicator, red LEDs in the event of a potential incorrect fuel delivery, and amber LEDs in the event of NO transponder being sensed.

## Claims

1. A misfuelling protection system when fuelling a vehicle from a fuel delivery pump of the type typically used for supply of fuel to a vehicle on a garage forecourt and which comprises a transceiver (23) on the fuel pump (30) and a transponder (14) on the vehicle, the transceiver (23) transmitting a request signal (R1) to the transponder and receiving a response signal (Rc) therefrom and having a pre-programmed control unit (26) for comparing the response signal with a plurality of anticipated response signals stored therein , **characterised in that** the control unit is programmed to recognise (N-1) response signals (Rc) as incorrect signals, where N is the number of anticipated signals, and the control unit responds to receipt of any of said incorrect signals and prevents a fuel delivery, such that the control unit (26) does not react to a correct signal or to no signal.

2. A system as claimed in Claim 1 wherein the misfuelling protection system further comprises a warning device (134) to alert the pump user depending upon said response signal (Rc).

3. A system as claimed in Claim 1 or Claim 2, wherein the control unit (26) is separate from the transceiver (23) and communicates with the transceiver by radio waves, infra red signals or via wiring

4. A system as claimed in any one of Claims 1 to 3, wherein the transceiver (23) is mounted on the pump delivery nozzle (20) and the transponder (14) is mounted adjacent the fuel filler inlet (10) on the vehicle.

5. A system as claimed in any one of Claims 1 to 4, wherein on receipt of one of said anticipated response signals (Rc), the transceiver (23) also provides a nozzle proximity signal (P) which indicates when the nozzle (20) is located in the filler inlet (10).

6. A system as claimed in any one of Claims 1 to 5 wherein on receipt of one of said anticipated response signals (Rc), the transceiver (23) generates a time elapse signal (T)

7. A system as claimed in Claim 2, wherein the control unit (26) also provides an activation signal (X) which operates a visual or audible warning (134) in the event that the response signal (Rc) is an incorrect signal.

8. A system as claimed in Claim 2 or Claim 7, wherein the control unit (26) further provides a signal (Z) which operates a positive indicator to show that the response signal (Rc) is not an incorrect signal and that fuel will be supplied to the vehicle.

9. A system as Claimed in any one of Claims 1 to 8, wherein the transponder device (14) on the vehicle has a programmable data storage system which as well as storing information relating to the correct vehicle fuel also stores and gathers other information relating to the vehicle.

10. A method of protection from supplying the wrong fuel from a fuel delivery pump (30), typically used for supply of fuel on a garage forecourt, to a vehicle fuel tank, said method comprising providing a transceiver (23) on the fuel pump (30) and a transponder (14) on the vehicle, the transceiver (23) having a pre-programmed control unit (26) for comparing a response signal (Rc) from the transponder (14) with a plurality of anticipated response signals stored therein , the transceiver (23) transmitting a request signal (R1) to the transponder (14) and receiving a response signal (Rc) therefrom, **characterised by** the control unit (26) recognising N-1 response signals (Rc) as incorrect signals , where N is the number of anticipated signals, and the control unit (26) responds to receipt of any of said incorrect signals to prevent a fuel delivery, such that the control unit (26) does not react to a correct signal or to no signal.

11. A method as claimed in Claim 10, wherein the potential supply of the wrong fuel is indicated by operation of a warning device.

12. A method as claimed in Claim 10 or Claim 11, wherein the supply of the correct fuel is indicated to the pump user.

13. A method as claimed in any one of Claims 10 to 12, wherein in the event that the transceiver receives no signal from the transponder (14) an alarm is activated.

## Patentansprüche

1. System zur Verhinderung eines falschen Befüllens mit Kraftstoff, wenn das Befüllen eines Fahrzeugs mit Kraftstoff an einer Tanksäule des Typs erfolgt, wie sie typisch im Vorhof einer Tankstelle zum Befüllen eines Fahrzeugs mit Kraftstoff verwendet wird, und welches einen Transceiver (23) an der Kraftstoffpumpe (30) und einen Transponder (14) am Fahrzeug aufweist, welcher Transceiver (23) ein Anforderungssignal (R1) an den Transponder sendet und ein Antwortsignal (Rc) von diesem empfängt und eine vorprogrammierte Steuereinheit (26) aufweist, um das Antwortsignal mit einer Mehrzahl von darin gespeicherten antizipierten Antwortsignalen zu vergleichen, **dadurch gekennzeichnet, dass** die Steuereinheit programmiert ist, (N-1) Antwortsignale (Rc) als inkorrekte Signale zu erkennen, wobei N die Anzahl der antizipierten Signale ist, und die Steuereinheit auf den Empfang irgendeines der inkorrekten Signale reagiert und eine Kraftstoffabgabe verhindert, derart, dass die Steuereinheit (26) nicht auf ein korrektes Signal oder auf kein Signal reagiert.

2. System nach Anspruch 1, wobei das System zur Verhinderung eines falschen Befüllens mit Kraftstoff ferner eine Warnvorrichtung (134) zum Warnen des Benutzers der Pumpe abhängig von dem Antwortsignal (Rc) umfasst.

3. System nach Anspruch 1 oder 2, wobei die Steuereinheit (26) vom Transceiver (23) getrennt ist und mit dem Transceiver über Funkwellen, Infrarotsignale oder über Verdrahtung kommuniziert.

4. System nach Anspruch 1 bis 3, wobei der Transceiver (23) an der Ausflussdüse (20) der Pumpe und der Transponder (14) neben dem Kraftstoffeinfülleinlass (10) des Fahrzeugs montiert ist.

5. System nach Anspruch 1 bis 4, wobei bei Empfang eines der antizipierten Antwortsignale (Rc) der Transceiver (23) auch ein Düsennähe-Signal (P) bereitstellt, welches anzeigt, wenn sich die Düse (20) im Einfülleinlass (10) befindet.

6. System nach Anspruch 1 bis 5, wobei bei Empfang eines der antizipierten Antwortsignale (Rc) der Transceiver ein Zeit-verstrichen-Signal (T) erzeugt.

7. System nach Anspruch 2, wobei die Steuereinheit (26) ferner ein Aktivierungssignal (X) bereitstellt, das in dem Fall, in dem das Antwortsignal (Rc) ein inkorrektes Signal ist, eine visuelle oder hörbare Warnung auslöst.

8. System nach Anspruch 2 oder Anspruch 7, wobei die Steuereinheit (26) ferner ein Signal (Z) bereitstellt, das eine positive Anzeige auslöst um anzuzeigen, dass das Antwortsignal (Rc) kein inkorrektes Signal ist, und dass das Fahrzeug mit Kraftstoff befüllt wird.

9. System nach Anspruch 1 bis 8, wobei die Transponder-Vorrichtung (14) des Fahrzeugs ein programmierbares Datenspeichersystem aufweist, welches neben der Speicherung von Information über den korrekten Fahrzeugkraftstoff auch andere Information über das Fahrzeug speichert und sammelt.

10. Verfahren zur Verhinderung eines Befüllens mit falschem Kraftstoff von einer Tanksäule (30), wie sie typisch im Vorhof einer Tankstelle zum Befüllen eines Kraftstofftanks mit Kraftstoff verwendet wird, wobei das Verfahren das Bereitstellen eines Transceivers (23) an der Kraftstoffpumpe (30) und einen Transponder (14) am Fahrzeug umfasst, wobei der Transceiver (23) eine vorprogrammierte Steuereinheit (26) zum Vergleichen eines Antwortsignals (Rc) vom Transponder (14) mit einer Mehrzahl von darin gespeicherten antizipierten Antwortsignalen aufweist, wobei der Transceiver (23) ein Anforderungssignal (R1) an den Transponder (14) sendet und ein Antwortsignal (Rc) von demselben empfängt, **dadurch gekennzeichnet, dass** die Steuereinheit (26) N-1 Antwortsignale (Rc) als inkorrekte Signale erkennt, wobei N die Anzahl der antizipierten Signale ist, und die Steuereinheit (26) auf den Empfang irgendeines der inkorrekten Signale anspricht, um eine Kraftstoffabgabe zu verhindern, derart, dass die Steuereinheit (26) nicht auf ein korrektes Signal oder auf kein Signal reagiert.

11. Verfahren nach Anspruch 10, wobei die potentielle Abgabe des falschen Kraftstoffs durch Auslösen einer Warnvorrichtung angezeigt wird.

12. Verfahren nach Anspruch 10 oder 11, wobei die Abgabe des korrekten Kraftstoffs dem Benutzer der Pumpe angezeigt wird.

13. Verfahren nach Anspruch 10 bis 12, wobei in dem Fall, in dem der Transceiver kein Signal vom Transponder (14) empfängt, ein Alarm ausgelöst wird.

## Revendications

1. Système de protection contre les erreurs de ravitaillement en carburant lors du ravitaillement en carburant d'un véhicule à un distributeur de carburant du type typiquement utilisé pour l'alimentation en carburant d'un véhicule à une station service et qui comprend un émetteur récepteur (23) placé sur le distributeur de carburant (30) et un transpondeur (14) placé sur le véhicule, l'émetteur récepteur (23) transmettant un signal de requête (R1) au transpondeur et recevant un signal de réponse (Rc) de celui-ci et ayant une unité de commande préprogrammée (26) servant à comparer le signal de réponse avec plusieurs signaux de réponse anticipés stockés dans celle-ci, **caractérisé en ce que** l'unité de commande est programmée pour reconnaître (N-1) signaux de réponse (Rc) comme étant des signaux incorrects, où N est le nombre de signaux anticipés, et **en ce que** l'unité de commande répond à la réception de l'un quelconque desdits signaux incorrects et empêche une alimentation en carburant, de sorte que l'unité de commande (26) ne réagit pas à un signal correct ou à l'absence de signal.

2. Système selon la Revendication 1, dans lequel le système de protection contre les erreurs de ravitaillement comprend en outre un dispositif d'avertissement (134) pour alerter l'utilisateur du distributeur en fonction dudit signal de réponse (Rc).

3. Système selon la Revendication 1 ou 2, dans lequel l'unité de commande (26) est séparée de l'émetteur récepteur (23) et communique avec l'émetteur récepteur par des ondes radio, par des signaux infrarouges ou par fils.

4. Système selon l'une quelconque des Revendications 1 à 3, dans lequel l'émetteur récepteur (23) est monté sur le pistolet du distributeur (20) et le transpondeur (14) est monté adjacent à l'entrée du réservoir de carburant (10) du véhicule.

5. Système selon l'une quelconque des Revendications 1 à 4, dans lequel à la réception de l'un desdits signaux de réponse anticipés (Rc), l'émetteur récepteur (23) fournit également un signal de proximité du pistolet (P) qui indique quand le pistolet (20) est localisé dans l'entrée du réservoir (10).

6. Système selon l'une quelconque des Revendications 1 à 5 dans lequel à la réception de l'un desdits signaux de réponse anticipés (Rc), l'émetteur récepteur (23) génère un signal du temps écoulé (T).

7. Système selon la Revendication 2, dans lequel l'unité de commande (26) fournit également un signal d'activation (X) qui actionne un avertissement visuel ou sonore (134) dans le cas où le signal de réponse (Rc) est un signal incorrect.

8. Système selon la Revendication 2 ou 7, dans lequel l'unité de commande (26) fournit en outre un signal (Z) qui actionne un indicateur positif pour montrer que le signal de réponse (Rc) n'est pas un signal incorrect et que le véhicule sera alimenté en carburant.

9. Système selon l'une quelconque des Revendications 1 à 8, dans lequel le dispositif transpondeur (14) du véhicule a un système de stockage de données programmable qui, en plus de stocker des informations relatives au carburant correct du véhicule, stocke et collecte également d'autres informations relatives au véhicule.

10. Procédé de protection contre l'alimentation du réservoir de carburant d'un véhicule avec un carburant incorrect d'un distributeur de carburant (30) comme typiquement utilisé pour l'alimentation en carburant à une station service, ledit procédé comprenant le fait de disposer un émetteur récepteur (23) sur le distributeur de carburant (30) et un transpondeur (14) sur le véhicule, l'émetteur récepteur (23) ayant une unité de commande préprogrammée (26) servant à comparer un signal de réponse (Rc) venant du transpondeur (14) avec plusieurs signaux de réponse anticipés stockés dans celle-ci, l'émetteur récepteur (23) transmettant un signal de requête (R1) au transpondeur (14) et recevant un signal de réponse (Rc) de celui-ci, **caractérisé par le fait que** l'unité de commande (26) reconnait N-1 signaux de réponse (Rc) comme étant des signaux incorrects, où N est le nombre de signaux anticipés, et en ce que l'unité de commande (26) répond à la réception de l'un quelconque desdits signaux incorrects pour empêcher une alimentation en carburant, de sorte que l'unité de commande (26) ne réagit pas à un signal correct ou à l'absence de signal.

11. Procédé selon la Revendication 10, dans lequel l'activation d'un dispositif d'avertissement indique le danger de ravitaillement avec un carburant incorrect.

12. Procédé selon la Revendication 10 ou 11, dans lequel l'alimentation du carburant correct est indiquée à l'utilisateur du distributeur.

13. Procédé selon l'une quelconque des Revendications 10 à 12, dans lequel une alarme est activée dans le cas où l'émetteur récepteur ne reçoit pas de signal du transpondeur (14).
